# EUROPEAN PATENT APPLICATION

(11) **EP 3 672 144 A1**
(43) Date of publication of application: **24.06.2020**
(21) Application number: 18845596.8
(22) Date of filing: 17.08.2018
(51) Int. Cl.: H04L 9/08, H04L 29/06, G06F 21/60

(54) **CRYPTOGRAPHIC SECURITY MODULE EQUIPMENT WITH NATIVE IMPLEMENTATION OF A CRYPTOGRAPHIC KEY MANAGEMENT COMMUNICATION PROTOCOL AND REMOTE CONFIDENCE ENHANCEMENT SYSTEM FOR AUTHORIZATION OF OPERATIONS**

(30) Priority: 17.08.2017 BR 102017017707
(71) Applicant: Kryptus Segurança Da Informação SA, 13084-791 Campinas (BR)
(72) Inventor: BEREZA JÚNIOR, André, 13334-030 Indaiatuba (BR); GOUVEA, Conrado Porto Lopes, 13084-460 Campinas (BR); YAMAMOTO, Felipe Kendi Alves, 13083-290 Campinas (BR); MANDAJI, Gabriel Francisco, 13087-067 Campinas (BR); SASAKI, Anderson Toshiyuki, 612 00 Brno (CZ); DE PAULO, Vitor, 13015-082 Campinas (BR); KAWAKAMI, Henrique de Medeiros, Portland, Oregón 97201 (US); PINHEIRO, Tiago Toledo, 13080-655 Campinas (BR); ALVES GALLO FILHO, Roberto, 13083-590 Campinas-SP (BR)
(74) Representative: Omnis-IP
(86) International application number: PCT/BR2018/050291
(87) International publication number: WO 2019/033193

(57) **Abstract**

The present invention describes a hardware security module (HSM) used for storing cryptographic objects with native implementation of a communication protocol used in diverse cryptographic key management interfaces. This configuration enables the HSM to establish secure communication directly with the user, dispensing with the use of intermediate servers, which allows additional security in the virtual provision of HSM services and secure code execution. A confidence enhancement method is also described, for the authorization of operations by entities or paper operations in an HSM with two or more authentication factors, via a remote connection, such as to guarantee access to the objects of the same user which are protected by the HSM.

## Description

### FIELD OF THE INVENTION

The disclosed invention is related to the field of hardware secure modules with native implementation of protocol for cryptographic keys management, the functionalities of secure code execution in a trusted environment, and the separation of storage and management services in multiple logical security modules implemented in one physical device.

### BACKGROUND

Hardware Security Modules (HSM) are equipment designed to protect sensible cryptographic objects. To achieve this purpose, an HSM has physical and logical protections to prevent unauthorized access to its content. In addition, it has secure interfaces and high performance in cryptographic operations.

A usual configuration of HSM consists of an external module connected directly to a computer or a server. The interface between a user and the HSM is based on a communication protocol adopted by the server and external applications.

Expansion of interactions between different platforms and networks resulted in an increased demand of sharing cryptographic keys and objects across different applications, such as databases, email services, and storage devices. However, the several secure communications protocols that cryptographic systems can use may potentially lead to redundancy and potential security vulnerabilities.

Thus, communication protocols for cryptographic systems are in development that aim to reduce the redundancy and incompatibility among different key management processes. Among these communication protocols, the Key Management Interoperability Protocol (KMIP) is the most widely accepted and used in cryptographic systems.

As a consequence of the growth in adoption of KMIP for cryptographic systems, manufacturers adapted their HSM to be compatible with this new protocol. The main strategy of adaptation consists in the inclusion of software 3 to intermediate the communication between the KMIP and HSM interfaces. From a customer perspective, the inclusion of the intermediate server 3 increases the number of systems to be integrated and maintained and, potentially, the demand of dedicated hardware.

In addition to the need to optimize the interchange of cryptographic keys, the growing use of cloud computing and storage promoted new use cases for HSM devices.

The patent application US2013179676 - **CLOUD-BASED HARDWARE SECURITY MODULES** describes the functionalities of a cloud-based HSM, in which direct access to the physical HSM is nonessential for a user to safely store cryptographic objects. In this embodiment, intermediate software and hardware, such as USB drivers, are required to operate the HSM.

The concept of offering the security functionalities of an HSM as a cloud-based service is also described in the patent US2015134953 - **METHOD AND APPARATUS FOR OFFERING CLOUD-BASED HSM SERVICES.** In this document, it is described a method to segment the physical HSM into several partitions and use a software-based controller to manage client requests. Problems related to communication protocol redundancies are intensified in this configuration, as each client and application can use distinct communication protocols. In addition, the inclusion of an extra communication layer, in this case the controller, adds a new potential vulnerability to the system.

Another use case for HSM devices is to provide secure environments for code execution for security-sensitivity applications. Current HSM devices that offer this functionality operate with proprietary communication protocols, which contributes for incompatibility between devices.

Secure management and storage of cryptographic objects are required for an increasing number of applications, as is the number of use cases for HSM devices. Although simpler to implement, the strategy of including an intermediate communication layer between applications and an HSM leads to increased maintenance and potential vulnerabilities in a system.

Therefore, problems remain unanswered by the current state of art. In order to increase the functionalities provided by an HSM, without adding vulnerabilities and maintenance to a system, there is a need of a device able to execute, without intermediaries, all activities required by potential use cases, and to communicate directly with cryptographic key management protocols.

In the case of the Key Management Interoperability Protocol (KMIP), there is no guidelines of the use of simultaneous credentials for the authentication and authorization of operations. As a consequence, strategies to provide a multi-factor authentication are required for an HSM that makes use of KMIP without any intermediate server or software.

### SUMMARY

The present invention describes a Hardware Secure Module (HSM) **5** with a native implementation of protocol for managing cryptographic keys. Thus, the HSM **5** can establish a direct and secure communication **4** with the client **1,** with no need of an intermediate server or software.

A direct interaction and without intermediaries between the HSM **5** and user applications **1** contributes to solve problems in the state-of-art of services of a virtual HSM and secure code execution.

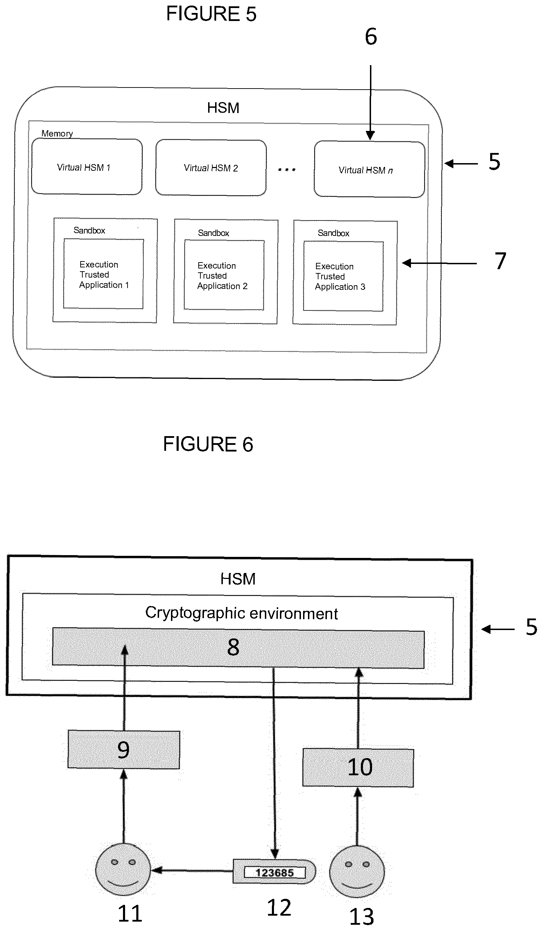

It is also described a method to increase the remote confidence in authorization of operations with two or more factors of authentication, remotely, in order to grant access to cryptographic objects to an entity protected by the HSM. In this system, all authentication is performed by direct connection with the HSM, without any intermediate software or hardware, as illustrated by Fig. 6.

### DESCRIPTION OF THE FIGURES

FIG. 1 presents a system of communication between an HSM **2** and a user **1** with an intermediate server **3** to establish the interoperability between the user interface and the HSM by using communication protocols such as KMIP. The intermediate server KMIP **3** establishes a secure communication **4** with a Transport Layer Security (TLS) between client and server.
FIG. 2 describes an HSM **5** with a native implementation of KMIP, and the secure communication layer **4** is established directly from the HSM to the user **1.**
FIG. 3 is a diagram with the architecture of the HSM with native implementation of KMIP **5** to achieve a logical separation between the services of storage and management of the HSM, as wells as resource sharing in a Virtual HSM **6.**
FIG. 4 is a diagram with the architecture of the HSM with native implementation of KMIP **5** with a logical separation between the services of storage and management of the HSM, and with a secure communication **4** of each virtual HSM with distinct users **1.**
FIG. 5 is a diagram with the architecture of the HSM with native implementation of KMIP **5** to enable secure code execution in an encrypted environment. Before code execution, the integrity and reliability of an application is verified by its digital signature. After verification, the application is executed in a sandbox environment **7,** to mitigate security problems.
FIG. 6 illustrates the architecture for multi-factor authentication for the HSM **5** with a native implementation of a KMIP interface **8.** Other elements present in the figure are:
   (9): Application to operate the HSM
   (10): Application to Accreditation
   (11): Entity responsible for the operation
   (12): Second factor authentication generator application
   (13): Entity responsible for accreditation
FIG. 7 is a workflow that demonstrates a method to operate a two-factor authentication with HSM **5.** An application to generate One Time Password (OTP) is used as the second factor authentication generator **12.** This figure illustrates one of the embodiments of the process of multi-step authentication for the HSM with native implementation of KMIP **5,** as other strategies to generate authentication factors can be used.

### DETAILED DESCRIPTION OF THE INVENTION

In the following detailed description, reference is made to the accompanying drawings, and in which are shown by way of illustration embodiments that may be practiced. It is to be understood that other embodiments may be utilized, and structural or logical changes may be made without departing from the scope. Therefore, the following detailed description is not to be taken in a limiting sense, and the scope of embodiments is defined by the appended claims and their equivalents.

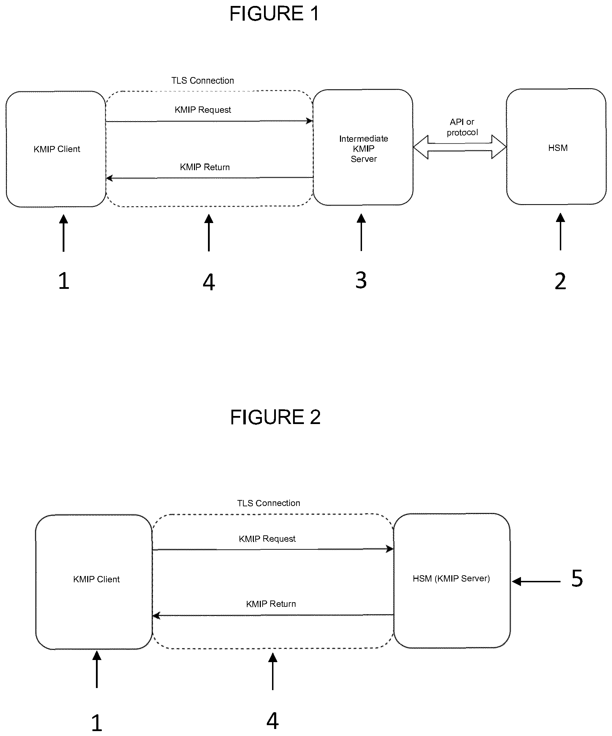

The disclosed invention consists of a hardware security module (HSM) **5** with a native implementation of a cryptographic key management communication protocol. This configuration enables a direct and secure **4** communication between the HSM and the user **1.** This is an improvement to the current HSM solutions, which require intermediate servers **2,** as shown in FIG. 1.

The communication protocol referred in this specification is the Key Management Interoperability Protocol (KMIP). This protocol enables the management of cryptographic keys between applications and cryptographic systems, which makes it the ideal communication protocol for an HSM that operates without intermediate servers **3.**

In this module, the user **1** operates the HSM **5** by interacting with an KMIP interface. The KMIP specifies which key management operations can be performed between a client and a server, and the expected outcomes of these operations. For example, the KMIP specifies the required operations to create a cryptographic key in the server, as well as the operations to enable a user **1** to use said key to digitally sign a document. In addition, the KMIP guarantees a secure communication **4** between the client **1** and server, secured by a Transport Layer Security (TLS).

A native implementation of KMIP in the HSM **5** enables direct KMIP requests to the HSM, dismissing intermediate software or servers between client and server.

Not only the HSM with native implementation of KMIP **5** decreases the need of extra intermediate software and hardware, but also extends the intrinsic physical security of an HSM to the process of user authentication.

An HSM **2** that requires an intermediate server **3** typically performs a user authentication by sending the user credentials to the server **3,** which compares this information with the stored credentials in a database outside of the HSM **2.** In this setting, the server accesses cryptographic objects associated with a user by using a credential that is specific to the HSM **2,** but that is stored by the server **3.** This authentication method makes the system more vulnerable, because only an HSM is secure from both a physical and logical perspective. In the disclosed invention, the user authentication is performed directly by the HSM **5,** which guarantees that user credentials are not stored in any intermediate server and that the connection is established directly with the HSM.

The disclosed architecture of the HSM **5** enables the additional functionalities of a Virtual HSM, Secure Code Execution, and Multi-Factor Authentication.

**Virtual HSM:** a Virtual HSM (VHSM) **6** is a logical entity that employs resources from a physical HSM. Each entity has its own users, keys, and access credentials. The owner of an HSM with VHSM can explore this functionality to isolate different sectors of a company by storing each department cryptographic objects in distinct VHSM. Another use case for a VHSM is as renting each partition and limiting the resources that can be used by each user.

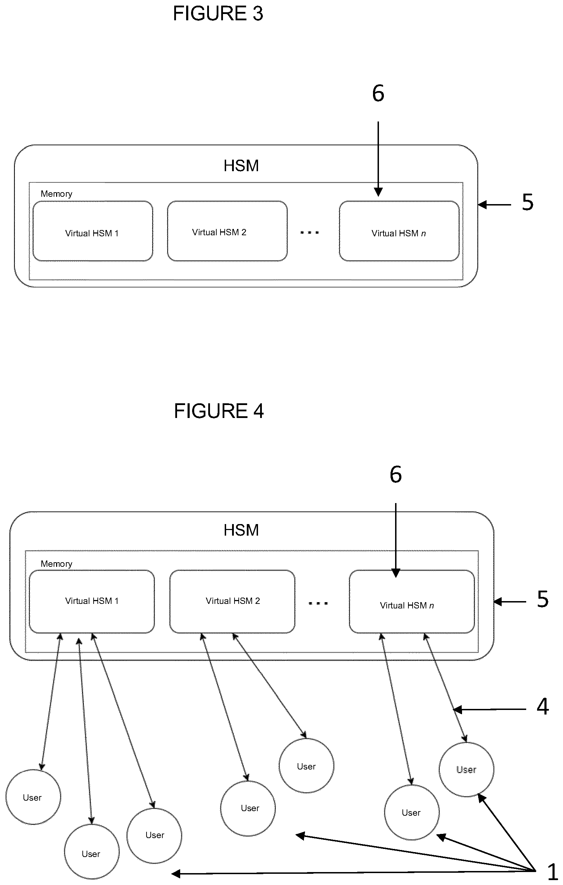

FIG. 3 illustrates the separation of VHSM units. Each VHSM **6** has a memory specification inside the HSM **5,** which prevents access to the data stored in other VHSM **6** units.

FIG. 4 illustrates how different users **1** access distinct units in the VHSM **6,** represented as distinct numbers. The user **1** communicates with the VHSM **6** by a KMIP communication. From a user **1** perspective, this interaction is similar to an interaction with an HSM **5** and allows access to only the user data and cryptographic objects.

A VHSM implemented in an HSM **5** with no intermediate servers **3** enables the process of user authentication to be performed by the HSM **5.** As a consequence, this authentication process has the logical and physical protections that are characteristics of an HSM **5.**

**Secure code execution:** an additional extension of the VHSM **6** is the execution of code registered by the user. Before code execution, the integrity and reliability of an application is verified by the HSM **5.** After verification, the application is executed in a sandbox environment **7,** to mitigate security problems, such as defective or malicious code.

Each sandbox **7** has a code, called Trusted Application, in execution, and all the applications are running inside the physical HSM **5,** in the same memory of execution of the VHSM **6.** There is no direct relationship between the number of VHSM **6** partitions and Trusted Applications.

**Multi-factor authentication:** a multi-factor authentication process is a strategy to increase the security level of a system, as it increases the confidence in the user identity before granting access to cryptographic objects.

It is described a method to increase the confidence in authorization of operations of an HSM **5** with a native implementation of KMIP. This method consists of a remote and multi-factor authentication to grant access to a user objects securely stored in the HSM **5.** The user authentication and authorization are established by direct connection with the HSM and employs the Key Management Interoperability Protocol with the required modifications disclosed.

The modules and roles defined in this architecture are:
**Entity responsible for accreditation (13):** responsible for adding new operators to the HSM **5.**

**Entity responsible for the operation (11):** responsible for operating the HSM **5.**

**Second factor authentication generator application (12):** application that generates the second factor authentication, based on any device. The second factor can be one or a combination of strategies such as time-based or cryptographic one-time password (OTP), biometrics, digital certificate, personal identification numbers, among others.

**Application to operate the HSM (9):** application to interact with the HSM, after authentication.

**Application to Accreditation (10):** application to accredit entities on the HSM.

In this disclosed invention, a credential of type OTP is added to KMIP protocol.

This added credential changes the authentication process, and a user informs two credentials, "user password" "second factor". The HSM **5** validates both information before granting access to a user.

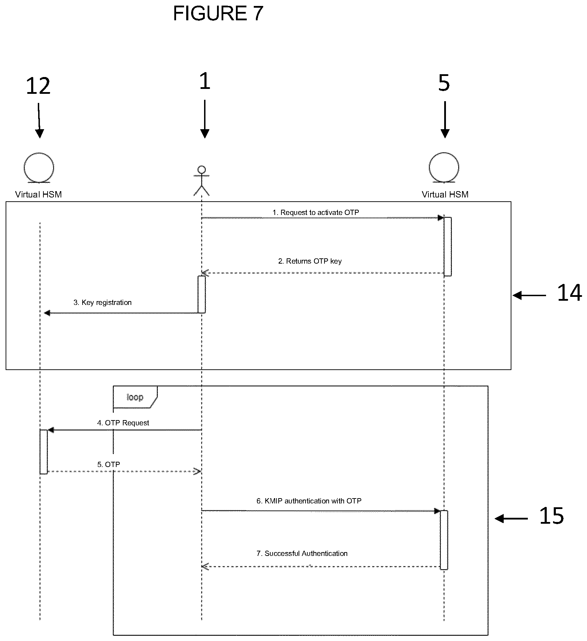

As illustrated in Fig. 7, the first step is the **Accreditation 14.** During accreditation, the **Entity responsible for accreditation** requires the creation of a new operator, via KMIP, and indicates that the authentication process of said operator includes a second-factor authentication. The **entity responsible for accreditation** sends the operator **1** information on how to install and operate the second-factor authentication application.

After this, the Second Factor is initialized. This process can be performed by the user **1** and the second-factor authentication application.

The next step is the **Access to HSM 15.** After the complete configuration of the second-factor authentication, the user accesses the HSM **5** after providing the username, password and the second factor generated by the second-factor authentication application.

The last step is the Operation of the HSM. After this, an operator can operate the HSM after submitting credentials.

## Claims

1. HARDWARE SECURITY MODULE EQUIPMENT WITH NATIVE IMPLEMENTATION OF A CRYPTOGRAPHIC KEY MANAGEMENT COMMUNICATION PROTOCOL AND REMOTE CONFIDENCE ENHANCEMENT SYSTEM FOR AUTHORIZATION OF OPERATIONS comprising a hardware security module with native implementation of communication protocol for user interface and management of cryptographic objects and direct and secure communication with user applications 1.

2. HARDWARE SECURITY MODULE EQUIPMENT WITH NATIVE IMPLEMENTATION OF A CRYPTOGRAPHIC KEY MANAGEMENT COMMUNICATION PROTOCOL AND REMOTE CONFIDENCE ENHANCEMENT SYSTEM FOR AUTHORIZATION OF OPERATIONS of claim 1, further comprising of operating natively the *Key Management Interoperability Protocol* for communication between the device 5 and the client.

3. HARDWARE SECURITY MODULE EQUIPMENT WITH NATIVE IMPLEMENTATION OF A CRYPTOGRAPHIC KEY MANAGEMENT COMMUNICATION PROTOCOL AND REMOTE CONFIDENCE ENHANCEMENT SYSTEM FOR AUTHORIZATION OF OPERATIONS of claim 1, further comprising virtual security modules 6 with logical separation of the storage and management of objects into secure partitions inside the physical module.

4. HARDWARE SECURITY MODULE EQUIPMENT WITH NATIVE IMPLEMENTATION OF A CRYPTOGRAPHIC KEY MANAGEMENT COMMUNICATION PROTOCOL AND REMOTE CONFIDENCE ENHANCEMENT SYSTEM FOR AUTHORIZATION OF OPERATIONS of claim 1, further comprising of compartmentalization of the device memory 7 for secure code execution.

5. HARDWARE SECURITY MODULE EQUIPMENT WITH NATIVE IMPLEMENTATION OF A CRYPTOGRAPHIC KEY MANAGEMENT COMMUNICATION PROTOCOL AND REMOTE CONFIDENCE ENHANCEMENT SYSTEM FOR AUTHORIZATION OF OPERATIONS, comprising a user authentication process performed logically and physically secured by the device 5.

6. HARDWARE SECURITY MODULE EQUIPMENT WITH NATIVE IMPLEMENTATION OF A CRYPTOGRAPHIC KEY MANAGEMENT COMMUNICATION PROTOCOL AND REMOTE CONFIDENCE ENHANCEMENT SYSTEM FOR AUTHORIZATION OF OPERATIONS of claim 5, further comprising the inclusion of additional authentication factors in the cryptographic keys management communication protocol and a multi-factor authentication process to access the device 5.

7. HARDWARE SECURITY MODULE EQUIPMENT WITH NATIVE IMPLEMENTATION OF A CRYPTOGRAPHIC KEY MANAGEMENT COMMUNICATION PROTOCOL AND REMOTE CONFIDENCE ENHANCEMENT SYSTEM FOR AUTHORIZATION OF OPERATIONS of claim 5, further comprising a multi-factor authentication process with the following phases:
1. Accreditation of entity or role by an authorized entity;
2. Initialization of the entity or role credentials;
3. Access to the HSM by the entity or role;
4. Operation of the HSM by the entity or role.

## Amended claims

### Amended claims under Art. 19.1 PCT

1. A hardware security module equipment with native implementation of a cryptographic key management communication protocol and remote confidence enhancement method for authorization of operations comprising:
a hardware security module 5 with native implementation of communication protocol for user interface and management of cryptographic objects; and
direct and secure communication with user applications 1.

2. The hardware security module equipment with native implementation of a cryptographic key management communication protocol and remote confidence enhancement method for authorization of operations of claim 1, further comprising of operating natively the *Key Management Interoperability Protocol* for communication between the device and the client.

3. The hardware security module equipment with native implementation of a cryptographic key management communication protocol and remote confidence enhancement method for authorization of operations of claim 1, further comprising virtual security modules 6 with logical separation of the storage and management of objects into secure partitions:
all virtual security modules execute in the device processor; and
each partition has a specific database.

4. The hardware security module equipment with native implementation of a cryptographic key management communication protocol and remote confidence enhancement method for authorization of operations of claim 1, further comprising of secure code execution by the hardware security module 5 by:
compartmentalization of the device memory 7 to each code to be executed; and
verification of the integrity of the code submitted to be run by the hardware security module 5.

5. A remote confidence enhancement method for authorization of operations comprising including additional authentication factors in the cryptographic keys management communication protocol.

6. The remote confidence enhancement method for authorization of operations of claim 5, further comprising:
1. a registered user or administrator of the hardware security module 5 requiring a multi-factor authentication process for a specific user 1;
2. the hardware security module 5 generating the key to enable multi-factor authentication of the user, storing this key in association with the user, and returning this key to the user;
3. the user 1 registering to a multi-factor authentication generator application 12 by providing the key generated by the hardware security module;
4. the user requesting, for each authentication in the hardware security module 5, the generation of a multi-factor credential by the multi-factor authentication application 12;
5. the authentication process at the hardware security module 5 requiring both the user credentials and the multi-factor credential;
6. data validation is performed by the hardware security module 5; and
7. if the authentication is successful, the user 1 is authenticated to operate the hardware security module 5.

7. The remote confidence enhancement method for authorization of operations of claims 5 and 6, further comprising a multi-factor authentication to operate a hardware security module 5 requiring the hardware security module and a multi-factor authentication application 12, storing the authentication information in the physically and logically protected hardware security module.

8. The remote confidence enhancement method for authorization of operations of claims 5, 6 and 7, further comprising a multi-factor authentication to operate a hardware security module 5 with a multi-factor authentication application 12 that operates algorithms for generation of one-time password.
